# EUROPEAN PATENT APPLICATION

(11) **EP 4 603 193 A1**
(43) Date of publication of application: **20.08.2025**
(21) Application number: 23912555.2
(22) Date of filing: 09.11.2023
(51) Int. Cl.: B05C 5/02, G06K 7/10, G06K 19/06

(54) **SLOT DIE COATING DEVICE**

(30) Priority: 28.12.2022 KR 20220186960
(71) Applicant: LG Energy Solution, Ltd., Seoul 07335 (KR)
(72) Inventor: PARK, Sanghwan, Daejeon 34122 (KR)
(74) Representative: Plasseraud IP
(86) International application number: PCT/KR2023/018005
(87) International publication number: WO 2024/143877

(57) **Abstract**

A slot die coating device according to an exemplary embodiment of the present disclosure includes: a lower die; an upper die disposed above the lower die and forming a slot; and a shim interposed between the lower die and the upper die to adjust a width of the slot, wherein at least one camera that measures the shim is disposed on a lower side surface of the upper die.

## Description

### [Technical Field]

### CROSS-REFERENCE TO RELATED APPLICATION

This application claims priority to and the benefit of Korean Patent Application No. 10-2022-0186960 filed in the Korean Intellectual Property Office on December 28, 2022, the entire contents of which are incorporated herein by reference.

The present disclosure relates to a slot die coating device, and more particularly, to a slot die coating device capable of minimizing occurrences of errors during a process.

### [Background Art]

Recently, as the price of energy sources has risen due to the depletion of fossil fuels, and the interest in environmental pollution has increased, the demand for eco-friendly alternative energy sources has become an essential factor for future life. Accordingly, research continues on various power production technologies such as nuclear power, solar power, wind power, and tidal power, and there is also great interest in power storage devices to more efficiently use the energy produced in this way.

In particular, as technology development and demand for mobile devices increase, the demand for batteries as energy sources is rapidly increasing, and accordingly, a lot of research is being conducted on batteries that meet various needs.

Typically, there is high demand for lithium secondary batteries such as lithium-ion batteries and lithium-ion polymer batteries, which have advantages such as high energy density, high discharge voltage, and high output stability.

A secondary battery is classified depending on a structure of an electrode assembly in which a cathode, an anode, and a separator interposed between the cathode and the anode are stacked. Typical examples of electrode assemblies include a jelly roll type electrode assembly in which long sheet-shaped cathodes and anodes are wound with a separator interposed therebetween, and a stack type electrode assembly in which a plurality of cathodes and anodes cut into units of a predetermined size are sequentially stacked with a separator interposed therebetween. Recently, in order to solve the problems of the jelly roll type electrode assembly and the stack type electrode assembly, a stack/folding type electrode assembly has been developed, as a mixture of the jelly roll type electrode assembly and the stack type electrode assembly, by sequentially winding unit cells in which cathodes and anodes of a predetermined unit are stacked with a separator interposed therebetween in a state where the unit cells are placed on a separator film.

**In** addition, depending on a shape of a case, a secondary battery may be classified as a cylindrical secondary battery in which an electrode assembly is built into a cylindrical case, a rectangular secondary battery in which an electrode assembly is built into a rectangular case, or a pouch-type secondary battery in which an electrode assembly is built into a pouch-type case of a laminated sheet.

To manufacture such a secondary battery, an electrode assembly is stored in a case, and sealed after an electrolyte is injected. The electrode assembly is manufactured by gathering unit cells stacked in a three-layer or five-layer structure with a separator interposed between a cathode and an anode. Such a positive or negative electrode may be manufactured by applying a slurry to an electrode current collector, and then drying and pressing the slurry. To apply the slurry, a slot die coating device is used. The slot die coating device is a device that coats a predetermined thickness on an object, such as a fabric, a film, a glass plate, or a sheet, by supplying a fluid, such as a slurry, an adhesive, a hard coating agent, or a ceramic, between processed upper and lower dies, using a pulsationless pump or a piston pump.

The slot die coating device used to manufacturing an electrode continuously applies a slurry to an electrode current collector in a predetermined direction. In order to form a discharge port through which the slurry is discharged, a shim for a die coater is interposed between two dies in the slot die coating device.

Such a shim may have various shapes depending on the type of slurry to be applied, and may be formed to be replaceable according to the applied process. Meanwhile, the shim replacement process includes actually measuring a new replacement shim, placing the new replacement shim at a correct position between the upper and lower dies, and then assembling the new replacement shim, but an error or shim damage occurs during the actual measurement and the assembly. In addition, there is a problem that it is necessary to check whether the shim is damaged and whether the shim has been inserted correctly during the coating after the assembly.

### [Disclosure]

### [Technical Problem]

The present disclosure attempts to provide a slot die coating device capable of reducing measurement errors or user-generated errors that may occur during shim replacement and assembly.

However, the problems to be solved by exemplary embodiments of the present disclosure are not limited to the aforementioned problems, and may be expanded in various ways within the scope of the technical spirit covered by the present disclosure.

### [Technical Solution]

An exemplary embodiment of the present disclosure provides a slot die coating device including: a lower die; an upper die disposed above the lower die and forming a slot; and a shim interposed between the lower die and the upper die to adjust a width of the slot, wherein at least one camera that measures the shim is disposed on a lower side surface of the upper die.

A barcode containing information on a shape of the shim may be formed on one surface of the shim facing the upper die.

The information contained in the barcode may be recognized by the at least one camera.

The lower side surface of the upper die may include at least one accommodation portion concavely formed from the lower side surface of the upper die.

Each of the at least one camera may be disposed inside each of the at least one accommodation portion.

A transparent window may be disposed at an open portion of the accommodation portion in such a manner as to form the same plane as the lower side surface of the upper die.

The shim may be formed to be replaceable.

The slot may be formed to correspond to a portion where the shim is not located.

The shim may include a base extending along a length direction of the slot die coating device and a plurality of guides extending from the base in a width direction of the slot die coating device.

The slot may be formed to correspond to a space between adjacent ones of the plurality of guides.

### [Advantageous Effects]

According to an exemplary embodiment of the present disclosure, a slot die coating device is capable of reducing measurement errors or user-generated errors that may occur during shim replacement and assembly.

The effects of the present disclosure are not limited to the aforementioned effects, and other effects that are not mentioned may be clearly understood by those skilled in the art from the claims.

### [Description of the Drawings]

FIG. 1 is an exploded view illustrating a slot die coating device according to an exemplary embodiment of the present disclosure.
FIG. 2 is a cross-sectional view taken along line II-II' of FIG. 1.
FIG. 3 is a view illustrating a lower side surface of an upper die of FIG. 1.

### [Mode for Invention]

Hereinafter, exemplary embodiments of the present disclosure will be described in detail with reference to the accompanying drawings, so that they can be easily carried out by those of ordinary skill in the art to which the present disclosure pertains. The present disclosure may be implemented in various different forms and is not limited to the exemplary embodiments described herein.

In order to clearly explain the present disclosure, parts irrelevant to the description will be omitted, and identical or similar components will be denoted by the same reference signs throughout the specification.

In addition, the size and thickness of each component shown in the drawings are arbitrary for convenience of explanation, and the present disclosure is not necessarily limited to what is illustrated. In the drawings, thicknesses of several layers and regions are enlarged for clarity. In addition, in the drawings, for convenience of explanation, thicknesses of some layers and regions are exaggerated.

In addition, when a part such as a layer, a film, a region, or a plate is referred to as being "on" another part, it may be "directly on" the another part or there may be an intervening part therebetween. In contrast, when a part is referred to as being "directly on" another part, there is no intervening part therebetween. In addition, when a part is referred to as being "on" a reference part, it is located on or under the reference part, and does not necessarily mean that it is located "on" the reference part in the opposite direction of gravity.

In addition, throughout the specification, when a certain part is referred to as "including" a certain component, this implies the presence of other components, not precluding the presence of other components, unless explicitly stated to the contrary.

In addition, throughout the specification, the phrase "in a plan view" means when a target part is viewed from above, and the phrase "in a cross-sectional view" means when a cross section of a target part as vertically cut is viewed laterally.

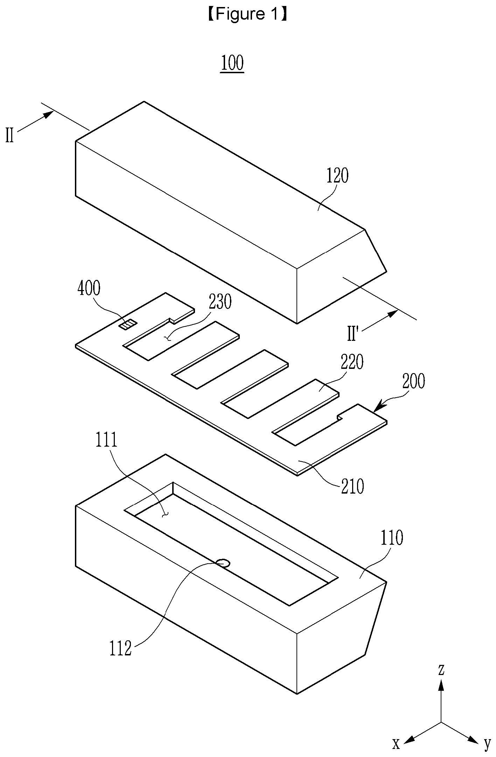

Hereinafter, a slot die coating device according to an exemplary embodiment of the present disclosure will be described with reference to FIGS. 1 to 3.

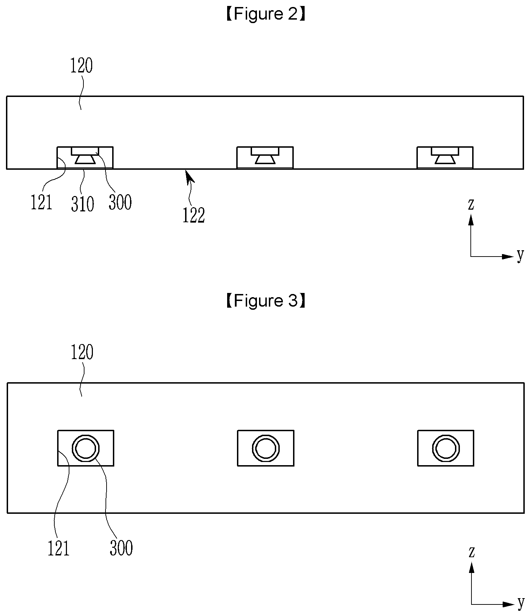

FIG. 1 is an exploded view illustrating a slot die coating device according to an exemplary embodiment of the present disclosure. FIG. 2 is a cross-sectional view taken along line II-II' of FIG. 1. FIG. 3 is a view illustrating a lower side surface of an upper die of FIG. 1.

Referring to FIG. 1, a slot die coating device according to an exemplary embodiment of the present disclosure includes a lower die 110, an upper die 120 disposed above the lower die 110 and forming a slot 230 through which a slurry flows and passes, and a shim 200 interposed between the lower die 110 and the upper die 120 to adjust a width and a shape of the slot 230.

The lower die 110 and the upper die 120 are assembled with one surfaces thereof facing each other. At this time, one surface of the lower die 110 and one surface of the upper die 120 facing each other may be formed to be larger than the size of the shim 200 to surround an outer surface of the shim 200. As a result, the assembled slot die coating device 100 can be configured so that the shim 200 does not protrude to the outside.

The lower die 110 may have a supply hole 112 through which a slurry is supplied from the outside, and may include an internal space 111 where the slurry supplied from the outside is stored. However, the configuration is not limited thereto, and the supply hole and internal space may be formed in the upper die 120 or may be formed in both the upper and lower dies.

The shim 200 is disposed between the lower die 110 and the upper die 120. Therefore, the lower die 110 and the upper die 120 are spaced apart from each other as much as the thickness of the shim 200, and the slot 230 is formed inside the slot die coating device 100. The slurry stored in the internal space 111 may flow along the slot 230, and may be discharged to the outside through a discharge port. The discharge port may be formed by a space between an end of the lower die 110 and an end of the upper die 120 at an end of the slot 230. The discharge port is formed thin and long, such that as the slot die coating device 100 moves on a current collector at a constant speed, the slurry can be widely and uniformly applied onto the electrode current collector.

The shim 200, which adjusts the width and the shape of the slot 230, may have various shapes depending on the pattern in which the slurry is applied. In particular, as illustrated in FIG. 1, the shim 200 may include a base 210 formed long on the opposite side of the end forming the discharge port along a length direction (an y-axis direction of the drawing) of the slot die coating device 100, and a plurality of guides 220 extending from the base 210 toward the discharge port. The plurality of guides 220 basically include two guides 220 formed at both ends of the base 210 to maintain the gap between the lower die 110 and the upper die 120, and may additionally include a plurality of guides 220 formed between the two guides 220 formed at both ends. That is, the number and width of the guides 220 may be appropriately adjusted depending on the type of pattern formed by the slurry applied from the discharge port. For example, in a case where the shim 200 includes only two guides 220 formed at both ends of the base 210, the slurry applied from the discharge port therebetween may have one wide pattern. If a guide 220 is added, the slurry may form a pattern such as a stripe shape.

A barcode 400 containing design information of the shim 200 may be formed on one surface of the shim 200, particularly on one surface of the shim 200 facing the upper die 120. The barcode 400 may be recognized by a camera, which will be described below, to provide information about the currently installed shim 200 at the time of designing a new shim 200. This information may include a thickness and a width of the shim 200, a thickness and a width of each of the guides 220 and the base 210, and a gap between the guides 220.

The shim 200 may be provided to be able to be replaced with one of the various shims 200 having various shapes according to the pattern obtained. That is, if a new shape is needed, a shim 200 having a new shape or thickness may be designed to be disposed between the lower die 110 and the upper die 120 for replacement. However, in the process of placing the new shim 200 between the lower die 110 and the upper die 120 and assembling them, there is a possibility that an error may occur because an operator do so in person. In addition, in order to obtain information (thickness, shape, location, etc.) about the existing shim 200 in the process of designing the new shim 200, it is necessary to disassemble all the components, and a design error may occur in this process as well.

That is, the design and assembly of the new shim 200 requires design information about the inside of the slot die coating device 100, especially information about the shim 200 between the lower die 110 and the upper die 120. To obtain the necessary information, a means is needed to prevent an error while the operator performs an actual measurement or disassemble or assemble the slot die coating device 100. To this end, in the present exemplary embodiment, at least one camera 300 is disposed on a lower side surface 122 of the upper die 120.

The camera 300 may be formed within an accommodation portion 121 concavely formed inward from the lower side surface 122 of the upper die 120. In this case, one camera 300 may be disposed within one accommodation portion 121. In addition, a transparent window 310 may be disposed at an open portion of the accommodation portion 121 in such a manner as to form the same plane as the lower side surface 122 of the upper die 120. By using this transparent window 310, it is possible to maintain the shape of the slot 230 and also prevent the camera 300 from being damaged by the slurry.

The camera 300 may directly photograph the shape of the shim 200 disposed below the camera 300 and transmit the information to an operator who designs a new shim 200. That is, a shim 200 are newly designed to have dimensions that match the dimensions of the slot die coating device 100 using the information about the shim 200 already included in the slot die coating device 100, e.g., thicknesses, widths, shapes of the guides 220 and base 210, and ratios.

In addition, the camera 300 may have a function as a sensor that recognizes the barcode 400. The information obtained by recognizing the barcode 400 containing information about the shim 200 may be provided to design a new shim 200. Although the information about the shim 200 can be provided by directly measuring a shape or a dimension of the shim 200 using the camera 300 as described above, if detailed information about the shim 200 itself is stored in the barcode 400 and the barcode 400 is recognized, more detailed and accurate information can be provided.

According to an exemplary embodiment of the present disclosure, it is possible to omit the stage where the operator has to perform an actual measurement for the information about the shim 200, thereby preventing various mistakes or errors that may occur in the actual measurement stage, and furthermore, accurately and quickly grasping the processing status (information) of the shim 200 without having to perform an actual measurement. Therefore, the shim 200 can be precisely processed according to the design and the shim 200 can be assembled at a correct position, thereby minimizing process errors and improving process efficiency.

Although the preferred exemplary embodiments of the present disclosure have been described in detail above, the scope of the present disclosure is not limited thereto, and various modifications and improvements made by those skilled in the art using the basic concept of the present disclosure defined in the following claims also fall within the scope of the present disclosure.

### <Description of symbols>

100: slot die coating device
110: lower die
120: upper die
200: shim
300: camera
400: barcode

## Claims

1. A slot die coating device comprising:
a lower die;
an upper die disposed above the lower die and forming a slot; and
a shim interposed between the lower die and the upper die to adjust a width of the slot,
wherein at least one camera that measures the shim is disposed on a lower side surface of the upper die.

2. The slot die coating device of claim 1, wherein
a barcode containing information on a shape of the shim is formed on one surface of the shim facing the upper die.

3. The slot die coating device of claim 2, wherein
the information contained in the barcode is recognized by the at least one camera.

4. The slot die coating device of claim 1, wherein
the lower side surface of the upper die comprises at least one accommodation portion concavely formed from the lower side surface of the upper die.

5. The slot die coating device of claim 4, wherein
each of the at least one camera is disposed inside each of the at least one accommodation portion.

6. The slot die coating device of claim 5, wherein
a transparent window is disposed at an open portion of the accommodation portion in such a manner as to form the same plane as the lower side surface of the upper die.

7. The slot die coating device of claim 1, wherein
the shim is formed to be replaceable.

8. The slot die coating device of claim 1, wherein
the slot is formed to correspond to a portion where the shim is not located.

9. The slot die coating device of claim 8, wherein
the shim includes a base extending along a length direction of the slot die coating device and a plurality of guides extending from the base in a width direction of the slot die coating device.

10. The slot die coating device of claim 9, wherein
the slot is formed to correspond to a space between adjacent ones of the plurality of guides.
